# FASCICULE DE BREVET EUROPEEN

(11) **EP 3 240 154 B1**
(45) Date de publication et mention de la délivrance du brevet: **05.09.2018**
(21) Numéro de dépôt: 17168413.7
(22) Date de dépôt: 27.04.2017
(51) Int. Cl.: H02K 5/22, H02K 11/26, H02K 11/40, H01R 13/53

(54) **BORNIER, MACHINE ÉLECTRIQUE COMPRENANT UN TEL BORNIER ET VÉHICULE COMPRENANT UNE TELLE MACHINE ÉLECTRIQUE**
TERMINALBLOCK, ELEKTRISCHE MASCHINE MIT EINEM SOLCHEN TERMINALBLOCK UND FAHRZEUG MIT EINER SOLCHEN ELEKTRISCHEN MASCHINE
TERMINAL BLOCK, ELECTRIC MACHINE COMPRISING SUCH A TERMINAL BLOCK AND VEHICLE COMPRISING SUCH AN ELECTRIC MACHINE

(30) Priorité: 29.04.2016 FR 1653862
(43) Date de publication de la demande: 01.11.2017
(73) Titulaire: ALSTOM Transport Technologies, 93400 Saint-Ouen (FR)
(72) Inventeur: SCHERER, Michel, 25320 Grandfontaine (FR); DUBOIS, Philippe, 25620 Trepot (FR)
(74) Mandataire: Lavoix

(56) Documents cités:
- US-A- 4 675 778
- US-A- 5 224 881
- US-A1- 2015 318 750
- US-B1- 6 188 560

## Description

La présente invention concerne un bornier, une machine électrique, telle qu'un moteur électrique de traction d'un véhicule à traction électrique, ou encore une génératrice, comprenant un tel bornier, ainsi qu'un véhicule à traction électrique comprenant un tel moteur électrique.

L'invention concerne le domaine de l'alimentation en énergie électrique des machines électriques et de la protection de ces dernières. L'invention trouve en particulier une application dans le domaine des véhicules à traction électrique, c'est-à-dire un véhicule qui est tracté ou propulsé par un ou plusieurs modules électriques, et dont la source d'énergie électrique n'est pas embarquée au sein du véhicule. L'énergie électrique est captée par le véhicule, par exemple à l'aide d'un système classique de pantographe et caténaire, ou par contact électrique avec un rail d'alimentation. Les véhicules à traction électrique concernés sont par exemple un métro, un tramway ou un train.

Sur certains véhicules de ce type, le moteur de traction est formé par un moteur synchrone à aimants permanents, pourvu d'un bornier, parfois dénommé « boîte à bornes », alimenté par un onduleur ou tout autre moyen d'alimentation du moteur. L'onduleur est conçu pour traiter l'énergie électrique captée par le véhicule et ainsi commander le moteur. Le véhicule est pourvu de moyens pour isoler électriquement le moteur de l'onduleur, en cas de détection d'un défaut électrique au sein du moteur. Ce moyen comprend par exemple un contacteur, électriquement interposé entre l'onduleur et le bornier du moteur.

Cependant, le moteur électrique à aimants permanents, même isolé de l'onduleur par l'ouverture du contacteur, maintient une tension de force électromotrice à ses bornes lorsqu'il est entrainé par l'avancement du véhicule, c'est-à-dire lorsque les essieux de ce dernier sont en rotation par exemple sous l'effet de l'inertie du véhicule ou de l'entraînement par les autres moteurs du véhicule. En cas de défaillance du moyen d'isolation, suite à l'apparition d'un défaut au sein du moteur ou au sein du bornier, un arc électrique est alors susceptible de se former, notamment entre deux des bornes du bornier, et est entretenu tant que le moteur est entraîné par l'avancement du train. Une fois l'isolation entre les bornes du bornier endommagée, il devient impossible d'arrêter l'arc électrique s'établissant entre les bornes tant que le moteur est entraîné. Un tel phénomène est susceptible de conduire à la destruction du moteur et ainsi provoquer un blocage brutal de ce dernier. Les essieux du véhicule sont alors eux-mêmes bloqués. Il est connu de pourvoir le véhicule d'un système de limiteur de couple, qui débraye le moteur des essieux en cas de brusque blocage du moteur, afin d'éviter le blocage des essieux.

Des problèmes similaires peuvent survenir dans le cas d'un bornier qui équiperait une génératrice électrique à aimants permanents.

US-A1-2012/0133224 divulgue une boîte à bornes pour un moteur triphasé, dont les bornes sont séparées de manière étanche par des cloisons isolantes afin d'augmenter la distance d'amorçage entre ces dernières et réduire le risque d'arc électrique. Néanmoins, ce type de boîtes à bornes n'est a priori pas suffisant pour les moteurs électriques à aimants permanents, pour lesquels un échauffement d'une borne est susceptible de rompre les cloisons isolantes et de créer ainsi un court-circuit entre deux des bornes de la boîte à bornes.

US 2015/318750 A1 décrit un compresseur entraîné par un moteur électrique pourvu d'un bornier avec des barres de connexion des phases du moteur électrique, séparées par des parois isolantes au sein du bornier. Pour les mêmes raisons, ce type de bornier ne permettrait pas de protéger efficacement certains équipements contre les surtensions, notamment dans le cas des moteurs électriques à aimants permanents.

Par conséquent, l'invention vise à porter remède aux inconvénients de l'art antérieur susmentionnés, en proposant un nouveau bornier apte à éviter la destruction partielle ou totale d'une machine électrique à laquelle il est connecté, en dépit d'un défaut électrique au sein de cette dernière.

L'invention a pour objet un bornier, pour une machine électrique, telle qu'un moteur électrique de traction ou une génératrice, la machine électrique présentant au moins deux bornes de phases, le bornier comprenant au moins deux platines de connexion et, pour chaque platine de connexion, des moyens de fixation de l'une des bornes de phases et d'une borne secondaire d'alimentation en énergie électrique de, et/ou de réception d'énergie électrique émise à, la borne de phase concernée, au moins une cloison intermédiaire isolante du bornier étant interposée entre les platines de connexion. Selon l'invention, ce bornier comprend au moins une âme intermédiaire conductrice, qui est disposée au sein de chaque cloison intermédiaire isolante et qui est configurée pour être électriquement connectée à une masse électrique de la machine électrique.

Grâce à l'invention, toute destruction partielle ou totale de la cloison intermédiaire isolante suite à un défaut électrique au niveau d'une des bornes entraîne la formation d'un arc électrique entre d'une part l'âme intermédiaire conductrice et d'autre part l'un des éléments en défaut suivants : l'une des platines de connexion, l'une des bornes de phase, ou l'une des bornes secondaires. Par conséquent, le risque de court-circuit par arc électrique entre deux bornes de phase, entre deux bornes secondaires ou entre deux platines de connexion, est évité. Le court-circuit est ainsi dévié vers la masse électrique de la machine électrique par l'intermédiaire de l'âme intermédiaire conductrice, de sorte que les dégâts imputés sur la machine électrique, suite au défaut électrique, sont au moins partiellement évités et que le déséquilibre des courants de phase induit par ce court-circuit à la masse peut être détecté par un système de commande prévu en amont.

Selon d'autres caractéristiques avantageuses de l'invention, prises isolément ou en combinaison :
- Le bornier comprend deux cloisons latérales isolantes, qui sont disposées de part et d'autre des platines de connexion, en étant parallèles à chaque cloison intermédiaire isolante, et il comprend deux âmes latérales conductrices, qui sont disposées respectivement au sein des cloisons latérales isolantes et qui sont électriquement reliées à chaque âme intermédiaire conductrice.
- Le bornier comprend :
   - un cadre isolant, qui est solidaire avec les platines de connexion et qui inclut la cloison intermédiaire isolante, et
   - une structure conductrice, qui inclut au moins chaque âme intermédiaire conductrice et une base conductrice sur laquelle chaque âme intermédiaire conductrice est fixée à demeure, la structure conductrice étant rapportée sur le cadre isolant.
- La structure conductrice comprend en outre un capot conducteur, relié électriquement à la base conductrice, de préférence via des éléments de fixation qui traversent le cadre isolant et s'étendent entre la base conductrice et le capot conducteur.
- Les platines de connexion sont conductrices, les moyens de fixation sont configurés pour que chaque borne secondaire soit électriquement reliée avec la borne de phase concernée par l'intermédiaire de l'une des platines de connexion, la continuité électrique entre chaque borne secondaire et la borne de phase concernée est assurée par la platine de connexion concernée.
- Les moyens de fixation sont configurés pour que chaque borne secondaire soit électriquement reliée avec la borne de phase concernée par mise en contact physique de chaque borne secondaire avec l'une des bornes de phases.
- Chaque borne secondaire comprend un câble de connexion et le bornier comprend au moins deux presse-étoupes configurés pour accueillir chacun l'un des câble de connexion.
- Au sein du bornier :
   - trois bornes de phases, trois bornes secondaires, trois platines de connexion, deux cloisons intermédiaires isolantes et deux âmes intermédiaires conductrices sont prévues,
   - chaque âme intermédiaire conductrice est ménagée au sein de l'une des cloisons intermédiaires isolantes, et
   - chaque cloison intermédiaire isolante est interposée entre deux des platines de connexion.

L'invention concerne également une machine électrique, telle qu'un moteur électrique de traction ou une génératrice, la machine électrique présentant au moins deux bornes de phases et une masse électrique, la machine électrique comprenant un bornier conforme à ce qui précède, chacune des bornes de phases étant fixée à l'une des platines de connexion par les moyens de fixation, et chaque âme intermédiaire conductrice étant électriquement connectée à la masse électrique.

L'invention concerne également un véhicule à traction électrique, comprenant une telle machine électrique, la machine électrique constituant un moteur électrique de traction du véhicule, le véhicule comprenant un circuit de puissance incluant une masse électrique à laquelle le moteur électrique de traction est électriquement connecté, le circuit de puissance comprenant un dispositif d'alimentation, tel qu'un onduleur, avec au moins deux bornes secondaires d'alimentation des bornes de phases du moteur électrique de traction avec de l'énergie électrique, chaque borne secondaire étant fixée à l'une des platines de connexion par les moyens de fixation.

L'invention sera mieux comprise à la lecture de la description qui va suivre, donnée uniquement à titre d'exemple non limitatif et faite en se référant aux dessins annexés dans lesquels :
- La figure 1 est une vue en perspective partielle d'un bornier conforme à l'invention ;
- La figure 2 est une vue en perspective éclatée du bornier de la figure 1 ;
- La figure 3 est une coupe transversale du bornier de la figure 1 selon le plan de coupe III représenté sur la figure 1 ;
- La figure 4 est une coupe transversale du bornier de la figure 1 selon le plan de coupe IV représenté sur la figure 1, le bornier étant représenté monté sur une machine électrique partiellement représentée ; et
- La figure 5 est une vue en perspective partielle de la machine électrique équipée du bornier des figures 1 à 4.

Dans ce qui suit, sauf si le contraire est explicitement précisé, le terme « isolant » fait référence à une isolation électrique suffisante pour les besoins de la machine électrique pour laquelle le bornier est mis en oeuvre, en condition normale d'utilisation. En cas de défaut électrique au sein de cette machine électrique, les éléments qualifiés avec le terme « isolant » sont susceptibles de ne plus être électriquement isolants, mais au contraire électriquement conducteurs. Le terme « conducteur » fait quant à lui référence, par opposition à « isolant », à une conduction électrique suffisante pour les besoins de la machine électrique pour laquelle le bornier est mis en oeuvre, en conditions normales d'utilisation.

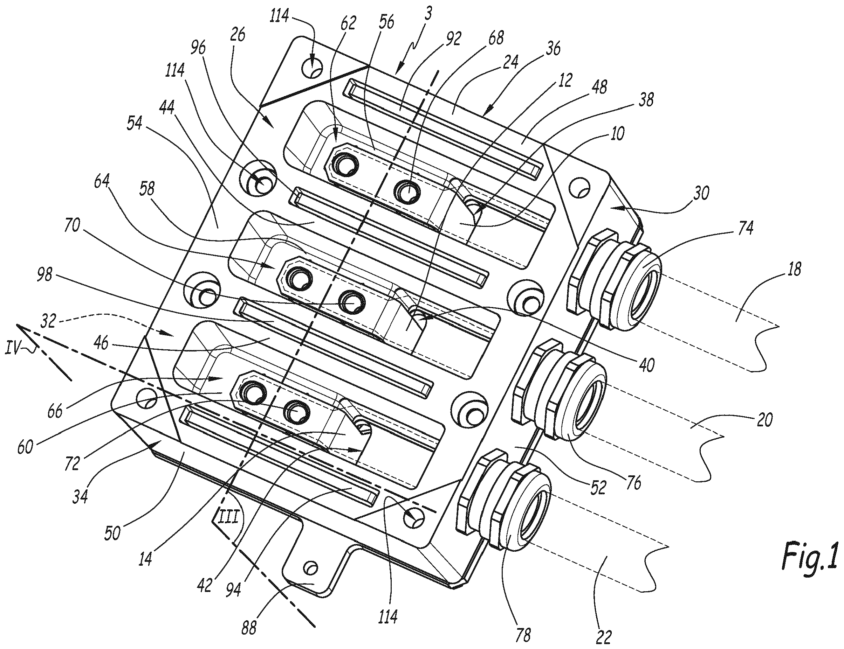

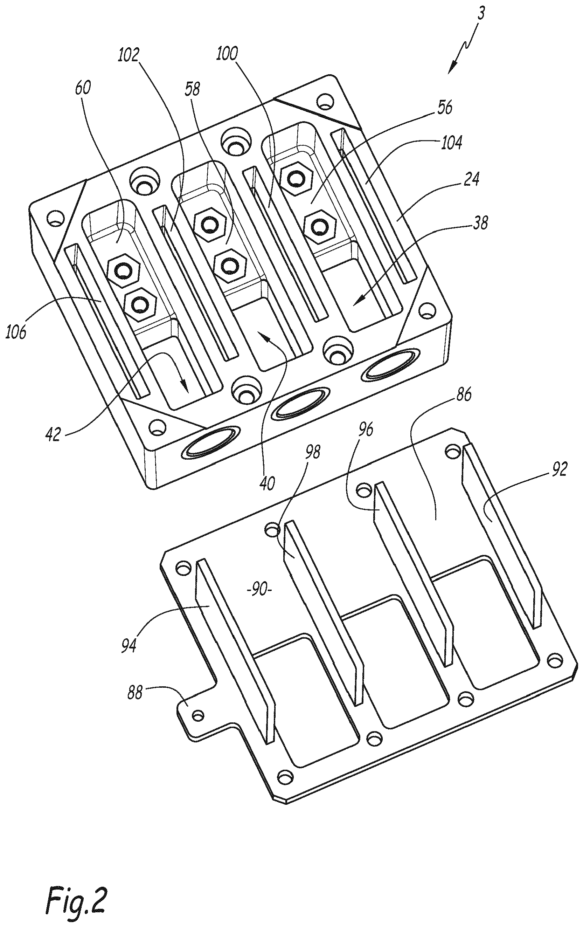

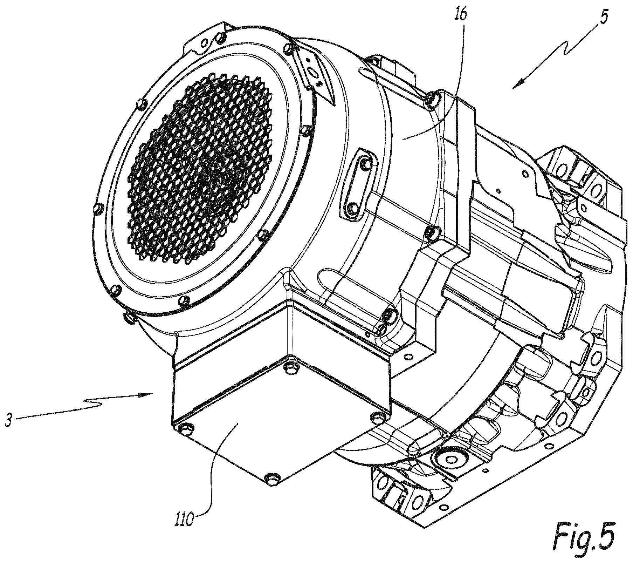

Dans cet exemple, le bornier 3, représenté aux figures 1 et 2, est configuré pour être intégré à un moteur électrique de traction 5, représenté sur la figure 5, d'un véhicule à traction électrique V, lui-même représenté sur cette figure par un panneau sur lequel est monté le moteur 5 au moyen de vis non représentées. Le moteur électrique 5 est préférentiellement un moteur électrique triphasé, à aimants permanents, en particulier de type synchrone.

Dans cet exemple, le moteur électrique 5 comprend un bobinage à trois phases, ainsi que trois bornes de phases 10, 12 et 14, visibles sur la figure 1, qui sont électriquement reliées aux trois phases et qui se présentent sous la forme de pièces de contact métalliques rigides, de façon connue en soi.

Le véhicule V à traction électrique comprend un circuit de puissance, non illustré, pour alimenter les bornes de phases 10, 12 et 14 et une masse électrique à laquelle le moteur 5 est électriquement connecté. En particulier, le moteur 5 comprend une carcasse conductrice 16 qui est connectée à la masse électrique du véhicule V. La carcasse conductrice 16 constitue elle-même une masse électrique du moteur 5.

Le circuit de puissance du véhicule V comprend un onduleur incluant trois bornes secondaires configurées pour alimenter chacune l'une des bornes de phases 10, 12 et 14. Chaque borne secondaire comprend un câble 18, 20 et 22 de connexion pour alimenter respectivement les bornes de phases 10, 12 et 14, les câbles 18, 20 et 22 étant représentés exclusivement sur la figure 1 en traits discontinus. Chaque borne secondaire alimente ainsi en énergie électrique l'une des bornes de phases 10, 12 ou 14 via l'extrémité de l'un des câbles 18, 20 ou 22 concerné, au sein du bornier 3. Pour cela, l'extrémité de chaque câble 18, 20 et 22 comprend par exemple une cosse de raccordement, non représentée, respectivement avec les bornes de phases 10, 12 et 14. Par la suite chaque borne secondaire portera la même référence que le câble de connexion qu'elle comprend.

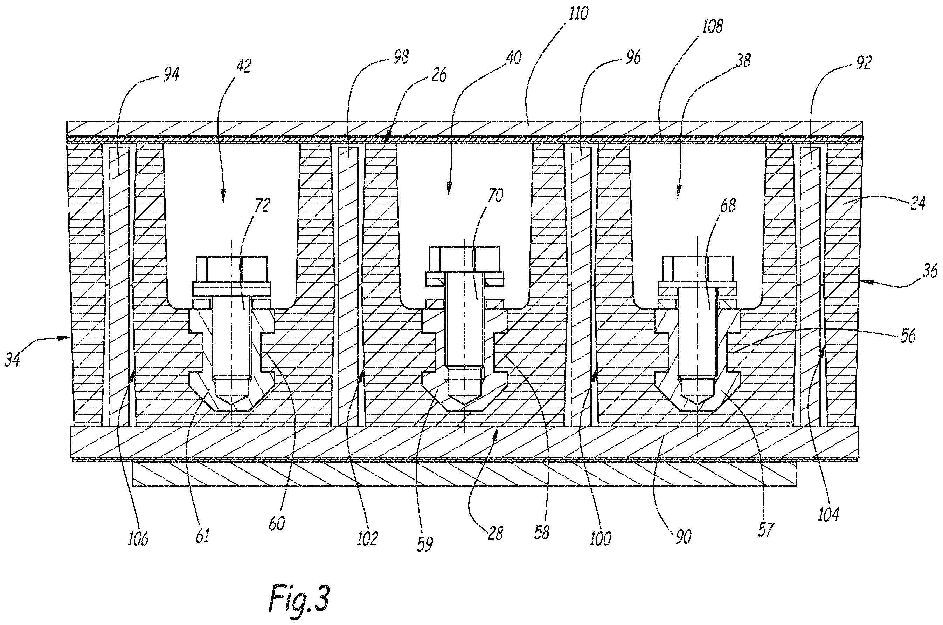

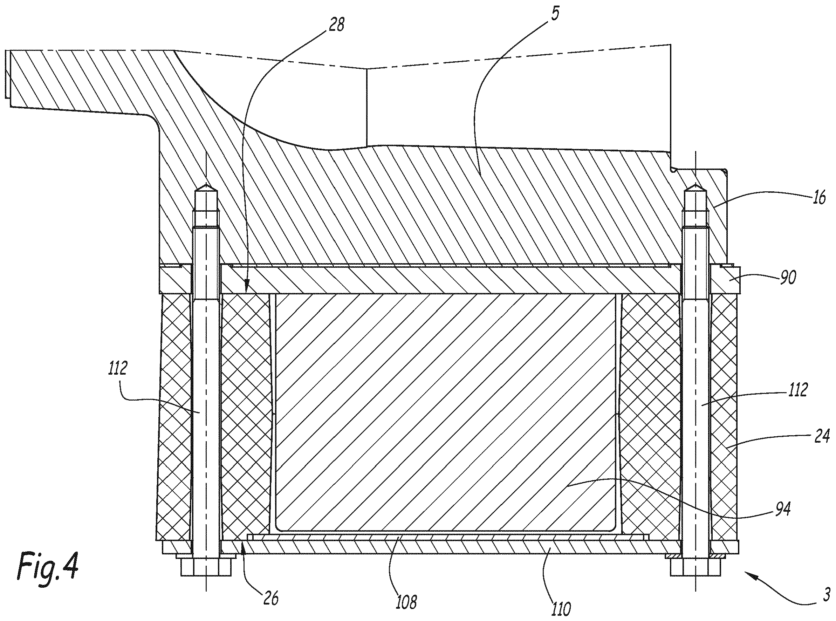

Le bornier 3 comprend principalement un cadre isolant 24, qui constitue une structure rigide. Par exemple, le cadre isolant 24 est réalisé, au moins en majorité de sa masse, en mat de verre rigidifié par une résine. Le cadre isolant 24 forme un solide de forme générale parallélépipédique qui présente une face supérieure 26, visible aux figures 1 à 4, opposée et parallèle à une face inférieure 28, laquelle est visible sur les figures 3 et 4. Le cadre isolant 24 comprend également une face avant 30 reliant les faces supérieure 26 et inférieure 28, ainsi qu'une face arrière 32 opposée et parallèle à la face avant 30. Le cadre isolant 24 comprend enfin une face latérale gauche 34 et une face latérale droite 36 opposées et parallèles, reliant entre elles la face avant 30 et la face arrière 32 ainsi que la face supérieure 26 et la face inférieure 28.

Trois gorges traversantes 38, 40 et 42 sont ménagées au travers du cadre isolant 24 depuis la face 26 jusqu'à la face 28. Les gorges 38, 40 et 42 sont chacune de section généralement rectangulaire et sont disposées parallèlement les unes par rapport aux autres, en étant alignées et régulièrement espacées entre la face 34 et la face 36.

Les gorges traversantes 38 et 40 sont séparées par une cloison intermédiaire isolante 44 du cadre 24, alors que les gorges traversantes 40 et 42 sont séparées par une cloison intermédiaire isolante 46 du cadre 24. Le cadre 24 comprend également deux cloisons latérales isolantes 48 et 50 qui sont disposées de part et d'autre des gorges traversantes 38, 40 et 42, la cloison latérale isolante 48 formant la face latérale droite 36, alors que la cloison latérale isolante 50 forme la face latérale gauche 34. Les cloisons 44, 46, 48 et 50 sont parallèles et s'étendent depuis la face supérieure 26 jusqu'à la face inférieure 28. Les cloisons 44, 46, 48 et 50 sont reliées entre elles par deux traverses 52 et 54, disposées perpendiculairement par rapport aux cloisons 44, 46, 48 et 50, la traverse 52 formant la face avant 30 et la traverse 54 formant la face arrière 32.

Le cadre isolant 24 est pourvu de trois platines de connexion 56, 58 et 60. La platine 56 est prévue au sein de la gorge traversante 38 en venant de matière avec les cloisons 48 et 44, à proximité de la face inférieure 28. De même, la platine de connexion 58 vient de matière avec les cloisons 44 et 46 à proximité de la face inférieure 28, au sein de la gorge 40. Enfin la platine 60 est prévue au sein de la gorge 42 et vient de matière avec les cloisons 46 et 50 au voisinage de la face inférieure 28. Les platines de connexion 56, 58, et 60 obturent seulement partiellement respectivement les gorges traversantes 38, 40 et 42. Chaque platine de connexion 56, 58 et 60 est ainsi isolée et séparée de sa platine adjacente par l'une des cloisons intermédiaires 44 ou 46, chaque cloison intermédiaire 44 et 46 étant interposée entre deux des platines 56, 58 et 60. Les cloisons latérales isolantes 48 et 50 sont quant à elles disposées de part et d'autre des platines de connexion 56 et 60.

Chaque platine de connexion 56, 58 et 60 comprend une face supérieure 62, 64 et 66, qui s'étend parallèlement à la face 26, entre cette face 26 et la face 28. Chaque borne de phase 10, 12 et 14 est fixée sur l'une des faces supérieures 62, 64 et 66 respectivement à l'aide de moyens de fixation, tels que des vis, des écrous, des tiges filetées, ou tout autre élément équivalent connu en tant que tel. Dans l'exemple illustré aux figures, les moyens de fixation sont formés par trois paires de vis 68, 70 et 72, chaque paire étant associée à l'une des bornes de phases 10, 12 et 14 et à l'une des platines 56, 58 et 60. Comme visible à la figure 3, les platines 56, 58 et 60 incluent respectivement des inserts conducteurs 57 ; 59 et 61 dans lesquels sont implantés les paires de vis 68, 70 et 72.

Le bornier 3 comprend également trois presse-étoupes 74, 76 et 78 montés sur la traverse 52 de façon traversante depuis la face 30 jusqu'à l'intérieur respectivement des gorges traversantes 38, 40 et 42. Les câbles 18, 20 et 22 sont respectivement montés de façon à traverser ces presse-étoupes 74, 76 et 78 et sont maintenus de façon étanche par ces derniers. L'extrémité de chaque câble 18, 20 et 22 s'étend au sein de l'une des gorges traversantes 38, 40 et 42 et est en contact électrique avec l'une des bornes de phases 10, 12 et 14. En pratique, chacune de ces extrémités est fixée sur l'une des platines 56, 58 et 60 par l'intermédiaire des moyens de fixation 68, 70 et 72 de façon à être en contact direct avec la borne de phase 10, 12 ou 14 concernée. Par contact « direct », on entend que l'extrémité de chaque câble 18, 20 et 22, ou chaque éventuelle cosse de raccordement des câbles 18, 20 et 22, est électriquement en contact avec l'une des bornes de phases 10, 12 et 14, ces dernières étant interposées entre les bornes secondaires et les platines de connexion 56, 58, 60 concernées. Dans ce cas préférentiel, ce n'est donc avantageusement pas les platines de connexion 56, 58 et 60 qui assurent la continuité électrique entre chaque bornes de phases 10, 12 et 14 et les bornes secondaires.

Le bornier 3 comprend également une structure conductrice 86 visible notamment à la figure 2. La structure conductrice 86 est une pièce métallique destinée à être rapportée sur le cadre isolant 24. La structure conductrice 86 est configurée pour être électriquement connectée à la masse électrique, par exemple à l'aide d'un câble pourvu d'une cosse, d'une tresse de masse, de graisse conductrice, ou tout autre moyen approprié. La structure conductrice 86 comprend optionnellement une patte 88 de reprise de masse électrique pour d'autres équipements. La structure conductrice 86 comprend une base conductrice 90 configurée pour recouvrir au moins partiellement la face 28 du cadre isolant 24. Pour cela, la base conductrice 90 forme une plaque métallique de forme correspondante à celle de la face inférieure 28. Dans cet exemple, la patte 88 fait saillie d'un bord de la base conductrice 90, dans le même plan que cette dernière, mais pourrait être réalisée d'une autre manière. La structure conductrice 86 comprend également quatre ailes conductrices, dont deux ailes latérales conductrices 92 et 94 et deux ailes intermédiaires conductrices 96 et 98 disposées entre les ailes latérales conductrices 92 et 94. Les ailes conductrices 92, 94, 96 et 98 forment des plaques de forme générale rectangulaire faisant saillie à partir de la base conductrice 90 en s'étendant dans des plans parallèles les uns aux autres et régulièrement espacés. Les ailes conductrices 92, 94, 96 et 98 sont perpendiculaires à la base conductrice 90 et sont préférentiellement fixées à demeure sur cette dernière, c'est-à-dire de façon définitive, par exemple à l'aide d'une soudure. Alternativement, les ailes conductrices 92, 94, 96 et 98 viennent de matière avec la base conductrice 90. Les ailes conductrices 92 à 98 sont ainsi électriquement reliées entre elles par l'intermédiaire de la base conductrice 90 et sont donc reliées également à la masse électrique.

Les cloisons isolantes 44, 46, 48 et 50 sont chacune pourvues d'une encoche traversante 100, 102, 104 et 106, chacune desquelles est ménagée depuis la face supérieure 26 jusqu'à la face inférieure 28. Les ailes conductrices 92, 94, 96 et 98 sont introduites au sein des encoches traversantes 100 à 106, à travers la face 28, lorsque la structure conductrice 86 est montée sur le cadre isolant 24, comme illustré à la figure 1, de sorte que les ailes conductrices forment respectivement des âmes conductrices 92, 94, 96 et 98 disposées au sein des cloisons isolantes 44, 46, 48 et 50. Chaque âme conductrice 92, 94, 96 et 98 est ainsi entourée par le matériau isolant de la cloison isolante 44, 46, 48 ou 50 dans laquelle elle est introduite. Les âmes conductrices 92, 94, 96 et 98 s'étendent alors depuis la face inférieure 28 jusqu'au voisinage de la face supérieure 26, au travers des encoches 100 à 106.

Le bornier 3 comprend également une couche d'isolant 108, visible uniquement sur la figure 3, qui est rapportée sur la face supérieure 26, de façon à recouvrir au moins la majorité de cette dernière tout en laissant quatre coins de cette face supérieure 26 libres. Dans l'exemple illustré sur les figures, la couche d'isolant 108 est préférentiellement réalisée dans un matériau de type élastomère, ou tout autre isolant adapté.

Le bornier 3 comprend également un capot conducteur 110, visible uniquement sur la figure 3, lequel est rapporté sur la face supérieure 26, de sorte que la couche d'isolant 108 est interposée entre le capot conducteur 110 et la face supérieure 26. Le capot conducteur 110 est préférentiellement réalisé dans le même matériau que la structure conductrice 86. Par ailleurs, le capot conducteur 110 est monté sur la face supérieure 26 à l'aide de huit boulons 112, dont deux sont représentés sur la figure 4, ou à l'aide de tout autre élément de fixation traversant conducteur approprié, en étant en appui sur les quatre coins de cette face 26. Les quatre coins sont en légère saillie par rapport à une partie centrale de la face 26, de sorte que la couche d'isolant 108 est avantageusement écrasée par le capot 110, ce qui permet d'assurer l'étanchéité de la fermeture du cadre 24 par le capot 110. Ces moyens de fixation conducteurs traversent de part en part le cadre isolant 24, par exemple au travers de huit orifices traversants 114 du cadre 24. Le bornier 3 peut avantageusement être fixé au moteur 5 par l'intermédiaire de ces moyens de fixation, comme visible sur la figure 4. De préférence, les moyens de fixation conducteurs sont en contact électrique avec la base conductrice 90. La base conductrice 90 et le capot conducteur 110 sont ainsi électriquement reliés par les moyens de fixation traversants. Un nombre de moyens de fixation et d'orifices traversants inférieur ou supérieur à huit peut être mis en oeuvre sans sortir du cadre de l'invention.

En variante non illustrée, une ou plusieurs des âmes conductrices 92, 94, 96 et 98 traversant la couche d'isolant 108, et sont en contact électrique avec le capot conducteur 110 pour relier physiquement et électriquement ce dernier avec la base conductrice 90. On comprend, de manière générale, que tout moyen approprié peut être utilisé pour relier électriquement le capot 110 à la base 90.

Grâce à la configuration particulière de ce bornier 3, toute destruction partielle ou totale de l'une des cloisons isolantes 44 à 50, en particulier des cloisons intermédiaires isolantes 44 et 46, conduit, avant l'apparition d'un arc électrique entre deux des bornes de phases 10, 12 et 14 ou entre deux des bornes secondaires 18, 20 et 22, à une mise à la masse de la borne de phase 10, 12 ou 14 ou de la borne secondaire 18, 20 ou 22 en défaut. La mise à la masse de cet élément en défaut permet une détection du défaut par une chaîne de traction du véhicule à traction électrique, ou tout autre dispositif de sécurité connu en tant que tel dont ce véhicule est pourvu. Le dispositif de sécurité commande alors avantageusement un isolement du moteur électrique 5. Le moteur électrique 5, et plus généralement le circuit de puissance du véhicule à traction électrique, est ainsi protégé en cas de défaut électrique. Le véhicule peut, dans ce cas, généralement poursuivre sa route avec son moteur 5 isolé, notamment dans le cas où le véhicule comprend d'autres moteurs de traction. Le coût de la réparation suite à l'apparition du défaut est ainsi réduit, le véhicule à traction électrique étant rendu disponible en dépit des défauts électriques susceptibles de survenir au sein de son moteur de traction. Par ailleurs, la présence des cloisons isolantes 44 à 50 permet de réduire l'encombrement général du bornier 3, par rapport à un cas où les âmes conductrices 92 à 98 seraient employées sans cloison isolante, c'est-à-dire à nu et à distance des platines de connexion 56 à 60, dans la mesure notamment où le matériau isolant des cloisons permet d'avoir des distances d'isolement entre les parties reliées électriquement au bobinage et la masse du moteur beaucoup plus courtes qu'avec des cloisons en matériau conducteur.

Le bornier 3 décrit ci-avant est également adapté pour toute machine électrique avec au moins deux phases, avec deux bornes de phases correspondantes, ou plus de trois bornes de phases, avec autant de bornes phases que nécessaire. On comprend que le bornier comprend autant de platines de connexion que de bornes de phases émanant de la machine électrique, de sorte qu'autant de bornes secondaires d'alimentation des phases peuvent y être connectées. En tout état de cause, le bornier comprend des cloisons intermédiaires interposées chacune entre deux des platines de connexion, et renfermant chacune une âme intermédiaire conductrice reliée à la masse de la machine électrique. De même, le bornier comprend autant de presse-étoupes que le moteur comprend de phases. Alternativement à des presse-étoupes, tout moyen adapté de fixation étanche des bornes secondaires peut être mis en oeuvre.

Alternativement à un véhicule à traction électrique, le bornier 3 décrit dans ce qui précède peut être utilisé dans un véhicule à énergie électrique embarquée, par exemple sur des batteries. Le bornier 3 peut alternativement être utilisé sur un véhicule à transmission électrique, comprenant un moteur électrique de traction alimenté en énergie électrique par une génératrice actionnée par un moteur thermique du véhicule. Le bornier 3 peut alternativement être utilisé au sein d'une installation électrique qui ne constitue pas un véhicule, mais qui est par exemple fixe, et qui inclut une machine électrique conforme à ce qui précède.

Alternativement au mat de verre, le cadre isolant 24 peut être réalisé dans un ou plusieurs autres matériaux isolants, tel qu'un polymère ou un matériau composite approprié.

En variante les âmes conductrices 92 à 98 sont intégrées au cadre isolant 24, de sorte que la base conductrice 90 est rapportée à la fois sur le cadre isolant 24 et sur les âmes conductrices 92 à 98.

En variante, chaque borne secondaire 18, 20 et 22 est électriquement reliée avec sa borne de phase 10, 12 ou 14 correspondante par l'intermédiaire de l'insert conducteur 57, 59 ou 61 de l'une des platines de connexion 56, 58 ou 60, l'énergie électrique d'alimentation de la machine électrique traversant dans ce cas les platines de connexion. Dans ce cas, les bornes secondaires 18, 20 et 22 ne sont pas nécessairement en contact physique avec les bornes de phases 10, 12 et 14, l'énergie électrique étant transmise au travers des inserts conducteurs 57, 59 et 61. Dans cette variante, la continuité électrique entre chaque borne secondaire 18, 20 et 22 et la borne de phase concernée est assurée par la platine de connexion 56, 58 ou 60 concernée.

Alternativement à un véhicule, le bornier 3 peut être mis en oeuvre au sein d'une installation électrique fixe comprenant une machine électrique telle que décrite ci-avant.

En variante non illustrée, la machine électrique est une génératrice d'énergie électrique, en particulier une génératrice synchrone à aimants permanents. La génératrice étant conçue pour générer de l'énergie électrique, qui est émise à ses bornes de phases. Cette énergie électrique est transmise par l'intermédiaire du bornier 3 à des bornes secondaires de réception d'énergie électrique, appartenant à un équipement électrique récepteur, tel qu'un transformateur. La génératrice électrique peut être mise en oeuvre dans le véhicule V décrit ci-avant, ou dans toute autre installation électrique sujette à la formation d'arcs électriques.

Les modes de réalisation et variantes décrits dans ce qui précède peuvent être combinés pour générer de nouveaux modes de réalisation, dans le cadre de l'invention, qui est définie par les revendications annexées.

## Revendications

1. Bornier (3), pour une machine électrique (5), telle qu'un moteur électrique de traction ou une génératrice, la machine électrique présentant au moins deux bornes de phases (10, 12, 14), le bornier comprenant au moins deux platines de connexion (56, 58, 60) et, pour chaque platine de connexion, des moyens de fixation (68, 70, 72) de l'une des bornes de phases (10, 12, 14) et d'une borne secondaire (18, 20, 22) d'alimentation en énergie électrique de, et/ou de réception d'énergie électrique émise à, la borne de phase concernée, au moins une cloison intermédiaire isolante (44, 46) du bornier étant interposée entre les platines de connexion, ce bornier (3) étant **caractérisé en ce qu'**il comprend au moins une âme intermédiaire conductrice (96, 98), qui est disposée au sein de chaque cloison intermédiaire isolante (44, 46) et qui est configurée pour être électriquement connectée à une masse électrique de la machine électrique.

2. Bornier (3) selon la revendication 1, **caractérisé en ce qu'**il comprend deux cloisons latérales isolantes (48, 50), qui sont disposées de part et d'autre des platines de connexion (56, 58, 60), en étant parallèles à chaque cloison intermédiaire isolante (44, 46), et **en ce qu'**il comprend deux âmes latérales conductrices (92, 94), qui sont disposées respectivement au sein des cloisons latérales isolantes et qui sont électriquement reliées à chaque âme intermédiaire conductrice (96, 98).

3. Bornier (3) selon l'une quelconque des revendications précédentes, **caractérisé en ce qu'**il comprend
- un cadre isolant (24), qui est solidaire avec les platines de connexion (56, 58, 60) et qui inclut la cloison intermédiaire isolante (44, 46), et
- une structure conductrice (86), qui inclut au moins chaque âme intermédiaire conductrice (96, 98) et une base conductrice (90) sur laquelle chaque âme intermédiaire conductrice est fixée à demeure, la structure conductrice étant rapportée sur le cadre isolant.

4. Bornier (3) selon la revendication 3, **caractérisé en ce que** la structure conductrice (86) comprend en outre un capot conducteur (110), relié électriquement à la base conductrice (90), de préférence via des éléments de fixation (112) qui traversent le cadre isolant (24) et s'étendent entre la base conductrice et le capot conducteur.

5. Bornier (3) selon l'une quelconque des revendications précédentes, **caractérisé en ce que** les platines de connexion (56, 58, 60) sont conductrices, **en ce que** les moyens de fixation (68, 70, 72) sont configurés pour que chaque borne secondaire (18, 20, 22) soit électriquement reliée avec la borne de phase (10, 12, 14) concernée par l'intermédiaire de l'une des platines de connexion, et **en ce que** la continuité électrique entre chaque borne secondaire et la borne de phase concernée est assurée par la platine de connexion concernée.

6. Bornier (3) selon l'une quelconque des revendications 1 à 4, **caractérisé en ce que** les moyens de fixation (68, 70, 72) sont configurés pour que chaque borne secondaire (18, 20, 22) soit électriquement reliée avec la borne de phase (10, 12, 14) concernée par mise en contact physique de chaque borne secondaire avec l'une des bornes de phases.

7. Bornier (3) selon l'une quelconque des revendications précédentes, **caractérisé en ce que** chaque borne secondaire (18, 20, 22) comprend un câble de connexion (18, 20, 22) et **en ce que** le bornier (3) comprend au moins deux presse-étoupes (74, 76, 78) configurés pour accueillir chacun l'un des câble de connexion.

8. Bornier (3) selon l'une quelconque des revendications précédentes, **caractérisé en ce que** :
- trois bornes de phases (10, 12, 14), trois bornes secondaires (18, 20, 22), trois platines de connexion (56, 58, 60), deux cloisons intermédiaires isolantes (44, 46) et deux âmes intermédiaires conductrices (96, 98) sont prévues,
- chaque âme intermédiaire conductrice (96, 98) est ménagée au sein de l'une des cloisons intermédiaires isolantes, et
- chaque cloison intermédiaire isolante (44, 46) est interposée entre deux des platines de connexion.

9. Machine électrique (5), telle qu'un moteur électrique de traction ou une génératrice, la machine électrique présentant au moins deux bornes de phases (10, 12, 14) et une masse électrique, la machine électrique comprenant un bornier (3) conforme à l'une quelconque des revendications précédentes, chacune des bornes de phases étant fixée à l'une des platines de connexion (56, 58, 60) par les moyens de fixation (68, 70, 72), et chaque âme intermédiaire conductrice (96, 98) étant électriquement connectée à la masse électrique.

10. Véhicule (V), à traction électrique, comprenant une machine électrique (5) conforme à la revendication précédente, la machine électrique constituant un moteur électrique de traction du véhicule, le véhicule comprenant un circuit de puissance incluant une masse électrique à laquelle le moteur électrique de traction est électriquement connecté, le circuit de puissance comprenant un dispositif d'alimentation, tel qu'un onduleur, avec au moins deux bornes secondaires (18, 20, 22) d'alimentation des bornes de phases du moteur électrique de traction avec de l'énergie électrique, chaque borne secondaire étant fixée à l'une des platines de connexion (56, 58, 60) par les moyens de fixation (68, 70 72).

## Patentansprüche

1. Anschlussblock (3) für eine elektrische Maschine (5), wie etwa einen elektrischen Antriebsmotor oder einen Generator, wobei die elektrische Maschine mindestens zwei Phasenanschlussklemmen (10, 12, 14) aufweist, wobei der Anschlussblock mindestens zwei Verbindungsstücke (56, 58, 60) und für jedes Verbindungsstück Mittel (68, 70, 72) zum Befestigen einer der Phasenanschlussklemmen (10, 12, 14) und einem Sekundäranschluss (18, 20, 22) zur elektrischen Energieversorgung der betreffenden Phasenanschlussklemme und/oder zum Empfangen von an dieser abgegebenen elektrischen Energie umfasst, wobei mindestens eine isolierende Zwischenwand (44, 46) des Anschlussblocks zwischen den Verbindungsstücken angeordnet ist, wobei dieser Anschlussblock (3) **dadurch gekennzeichnet ist, dass** er einen leitenden Zwischensteg (96, 98) umfasst, der an jeder isolierenden Zwischenwand (44, 46) angeordnet ist und der ausgebildet ist, mit einer elektrischen Masse der elektrischen Maschine elektrisch verbunden zu werden.

2. Anschlussblock (3) nach Anspruch 1, **dadurch gekennzeichnet, dass** er zwei isolierende Seitenwände (48, 50) umfasst, die beidseitig der Verbindungsstücke (56, 58, 60) angeordnet sind, wobei sie parallel zu jeder isolierenden Zwischenwand (44, 46) liegen, und dass er zwei leitende Seitenstege (92, 94) umfasst, die jeweils an den isolierenden Seitenwänden angeordnet sind und die elektrisch mit jedem leitenden Zwischensteg (96, 98) verbunden sind.

3. Anschlussblock (3) nach einem beliebigen der vorhergehenden Ansprüche, **dadurch gekennzeichnet, dass** er umfasst:
- einen isolierenden Rahmen (24), der mit den Verbindungsstücken (56, 58, 60) verbunden ist und der die isolierende Zwischenwand (44, 46) einschließt, und
- ein leitendes Gebilde (86), das mindestens jeden leitenden Zwischensteg (96, 98) und eine leitende Grundplatte (90), auf der jeder leitende Zwischensteg dauerhaft befestigt ist, einschließt, wobei das leitende Gebilde an dem isolierenden Rahmen angebracht ist.

4. Anschlussblock (3) nach Anspruch 3, **dadurch gekennzeichnet, dass** das leitende Gebilde außerdem eine leitende Abdeckung (110) umfasst, die elektrisch mit der leitenden Grundplatte (90), vorzugsweise über Befestigungselemente (112), verbunden ist, die den isolierenden Rahmen (24) durchgreifen und sich zwischen der leitenden Grundplatte und der leitenden Abdeckung erstrecken.

5. Anschlussblock (3) nach einem beliebigen der vorhergehenden Ansprüche, **dadurch gekennzeichnet, dass** die Verbindungsstücke (56, 58, 60) leitend sind, dass die Befestigungsmittel (68, 70, 72) so ausgebildet sind, dass jeder Sekundäranschluss (18, 20, 22) elektrisch mit der betreffenden Anschlussklemme (10, 12, 14) über eines der Verbindungsstücke verbunden ist, und dass die elektrische Durchgängigkeit zwischen jedem Sekundäranschluss und der betreffenden Phasenanschlussklemme durch das betreffende Verbindungsstück sichergestellt ist.

6. Anschlussblock (3) nach einem beliebigen der Anschlüsse 1 bis 4, **dadurch gekennzeichnet, dass** die Befestigungsmittel (68, 70, 72) so ausgebildet sind, dass jeder Sekundäranschluss (18, 20, 22) elektrisch mit der betreffenden Phasenanschlussklemme (10, 12, 14) durch physisches Inkontaktbringen jedes Sekundäranschlusses mit einer der Phasenanschlussklemmen verbunden ist.

7. Anschlussblock (3) nach einem beliebigen der vorhergehenden Ansprüche, **dadurch gekennzeichnet, dass** jeder Sekundäranschluss (18, 20, 22) ein Verbindungskabel (18, 20, 22) umfasst und dass der Anschlussblock (3) mindestens zwei Kabelverschraubungen (74, 76, 78) umfasst, die ausgebildet sind, jeweils eines der Verbindungskabel aufzunehmen.

8. Anschlussblock (3) nach einem beliebigen der vorhergehenden Ansprüche, **dadurch gekennzeichnet, dass**:
- drei Phasenanschlussklemmen (10, 12, 14), drei Sekundäranschlüsse (18, 20, 22), drei Verbindungsstücke (56, 58, 60), zwei isolierende Zwischenwände (44, 46) und zwei leitende Zwischenstege (96, 98) vorgesehen sind,
- jeder leitende Zwischensteg (96, 98) an einer der isolierenden Zwischenwände angeordnet ist und
- jede isolierende Zwischenwand (44, 46) zwischen zwei Verbindungsstücken angeordnet ist.

9. Elektrische Maschine (5), wie etwa ein elektrischer Antriebsmotor oder ein Generator, wobei die elektrische Maschine mindestens zwei Phasenanschlussklemmen (10, 12, 14) und eine elektrische Masse aufweist, wobei die elektrische Maschine einen Anschlussblock (3) gemäß einem der vorhergehenden Ansprüche umfasst, jede der Phasenanschlussklemmen an einem der Verbindungsstücke (56, 58, 60) durch Befestigungsmittel (68, 70, 72) befestigt ist und jeder leitende Zwischensteg (96, 98) elektrisch mit der elektrischen Masse verbunden ist.

10. Fahrzeug (V) mit elektrischem Antrieb, eine elektrische Maschine (5) gemäß dem vorhergehenden Anspruch umfassend, wobei die elektrische Maschine einen elektrischen Antriebsmotor des Fahrzeugs bildet, das Fahrzeug einen Leistungskreis umfasst, der eine elektrische Masse einschließt, an die der elektrische Antriebsmotor elektrisch angeschlossen ist, wobei der Leistungskreis eine Versorgungsvorrichtung, wie etwa einen Wechselrichter, mit mindestens zwei Sekundäranschlüsse (18, 20, 22) zur Versorgung der Phasenanschlussklemmen des elektrischen Antriebsmotors mit elektrischer Energie aufweist, wobei jeder Sekundäranschluss an einem der Verbindungsstücke (56, 58, 60) durch die Befestigungsmittel (68, 70, 72) befestigt ist.

## Claims

1. A terminal block (3), for an electric machine (5), such as an electric traction motor or a generator, the electric machine having at least two phase terminals (10, 12, 14), the terminal block comprising at least two connection plates (56, 58, 60) and, for each connection plate, means (68, 70, 72) for attaching one of the phase terminals (10, 12, 14) and a secondary terminal (18, 20, 22) for supplying electric power from, and/or electric power reception emitted at, the relevant phase terminal, at least one insulating intermediate partition (44, 46) of the terminal block being interposed between the connection plates, this terminal block (3) being **characterized in that** it comprises at least a conductive intermediate core (96, 98), which is positioned within each insulating intermediate partition (44, 46) and which is configured so as to be electrically connected to an electric ground of the electric machine.

2. The terminal block (3) according to claim 1, **characterized in that** it comprises two insulating side partitions (48, 50), which are positioned on either side of the connection plates (56, 58, 60), while being parallel to each insulating intermediate partition (44, 46), and **in that** it comprises two conductive side cores (92, 94), which are respectively positioned within insulating side partitions and which are electrically connected to each conductive intermediate core (96, 98).

3. The terminal block (3) according to any of the preceding claims, **characterized in that** it comprises
- an insulating frame (24), which is secured with the connection plates (56, 58, 60) and which includes the insulating intermediate partition (44, 46), and
- a conductive structure (86) which includes at least each conductive intermediate core (96, 98) and a conductive base (90) on which each conductive intermediate core is permanently attached, the conductive structure being added on the insulating frame.

4. The terminal block (3) according to claim 3, **characterized in that** the conductive structure (86) further comprises a conductive hood (110), electrically connected to the conductive base (90), preferably via attachment elements (112) which cross the insulating frame (24) and extend between the conductive base and the conductive hood.

5. The terminal block (3) according to any of the preceding claims, **characterized in that** the connection plates (56, 58, 60) are conductive, **in that** the attachment means (68, 70, 72) are configured so that each secondary terminal (18, 20, 22) is electrically connected with the relevant phase terminal (10, 12, 14) via one of the connection plates, and **in that** the electric continuity between each secondary terminal and the relevant phase terminal is ensured by the relevant connection plate.

6. The terminal block (3) according to any of claims 1 to 4, **characterized in that** the attachment means (68, 70, 72) are configured so that each secondary terminal (18, 20, 22) is electrically connected with the relevant phase terminal (10, 12, 14) by putting in physical contact of each secondary terminal with one of the phase terminals.

7. The terminal block (3) according to any of the preceding claims, **characterized in that** each secondary terminal (18, 20, 22) comprises a connection cable (18, 20, 22) and **in that** the terminal block (3) comprises at least two glands (74, 76, 78) configured for each receiving one of the connection cables.

8. The terminal block (3) according to any of the preceding claims, **characterized in that**:
- three phase terminals (10, 12, 14), three secondary terminals (18, 20, 22), three connection plates (56, 58, 60), two insulating intermediate partitions (44, 46) and two conductive intermediate cores (96, 98) are provided,
- each conductive intermediate core (96, 98) is made within one of the insulating intermediate partitions, and
- each insulating intermediate partition (44, 46) is interposed between two of the connection plates.

9. An electric machine (5), such as an electric traction motor or a generator, the electric machine having at least two phase terminals (10, 12, 14) and an electric ground, the electric machine comprising a terminal block (3) according to any of the preceding claims, each of the phase terminals being attached to one of the connection plates (56, 58, 60) by the attachment means (68, 70, 72), and each conductive intermediate core (96, 98) being electrically connected to the electric ground.

10. A vehicle (V), with electric traction, comprising an electric machine (5) according to the preceding claim, the electric machine making up an electric traction motor of the vehicle, the vehicle comprising a power circuit including an electric ground to which the electric traction motor is electrically connected, the power circuit comprising a power supply device, such as an inverter, with at least two secondary terminals (18, 20, 22) for powering phase terminals of the electric traction motor with electric power, each secondary terminal being attached to one of the connection plates (56, 58, 60) by the attachment means (68, 70 72).
